# EUROPÄISCHE PATENTSCHRIFT

(11) **EP 3 099 619 B1**
(45) Veröffentlichungstag und Bekanntmachung des Hinweises auf die Patenterteilung: **27.06.2018**
(21) Anmeldenummer: 15704708.5
(22) Anmeldetag: 27.01.2015
(51) Int. Cl.: B66C 13/56, H01H 9/02, H05K 5/02, B66F 9/075, E02F 9/20, G08C 17/02, G08C 17/00, H04B 1/03

(54) **SENDE-/EMPFANGSVORRICHTUNG**
TRANSMITTING/RECEIVING DEVICE
DISPOSITIF D'ÉMISSION/RÉCEPTION

(30) Priorität: 30.01.2014 DE 202014000753 U
(43) Veröffentlichungstag der Anmeldung: 07.12.2016
(73) Patentinhaber: Haug, Thomas, 75217 Birkenfeld (DE)
(72) Erfinder: Haug, Thomas, 75217 Birkenfeld (DE)
(74) Vertreter: Wacker, Jost Oliver
(86) Internationale Anmeldenummer: PCT/EP2015/000145
(87) Internationale Veröffentlichungsnummer: WO 2015/113754

(56) Entgegenhaltungen:
- WO-A1-2005/033822
- WO-A1-2006/036115
- WO-A1-2008/055480
- GB-A- 2 227 364
- US-B1- 8 325 078
- "Enrange MLTX2 Bellybox Transmitter", Canada, 16. März 2012 (2012-03-16), Seiten 1-2, XP055186202, www.magnetekhydraulic.com Gefunden im Internet: URL:http://web.archive.org/web/20120316210 123/http://www.proportionalradiocontrols.c om/pdf/Enrange-MLTX2-Belly-Box-Brochure.pd f [gefunden am 2015-04-28]
- "REM Radio Control - PAIL", Italy, 15. Juli 2011 (2011-07-15), XP055186238, www.remdevice.com Gefunden im Internet: URL:http://web.archive.org/web/20110715010 903/http://www.remdevice.com/pdf/Folder-te desco_.pdf [gefunden am 2015-04-28]
- Control Chief Wireless Solutions: "L Series Industrial Wireless Radio Remote Control System", , 9 May 2010 (2010-05-09), pages 1-2, XP055385417, Internet; controlchief.com Retrieved from the Internet: URL:http://controlchief.com/transmitters/l j-crane-remote-control-transmitter/ [retrieved on 2017-06-27]

## Beschreibung

Die Erfindung betrifft eine tragbare und insbesondere kabellose Sende-/Empfangsvorrichtung, das heißt eine Vorrichtung, mittels der zumindest Signale gesendet und vorzugsweise auch empfangen werden können, wie insbesondere eine Fernsteuerungsvorrichtung für Hub- und Industriegeräte, nach dem Oberbegriff des Anspruchs 1. Diese weist ein Gehäuse auf, an dem eine Aufnahme zur Unterbringung einer Steuerelektronik vorgesehen ist und das zur Lagerung wenigstens eines Bedienungselementes, wie Joystick, Schalter, Regler oder Touchscreen mit virtuellen Bedienelementen, oder einer Anzeige dient. Das Gehäuse erstreckt sich, bezogen auf die Ausrichtung der Sende-/Empfangsvorrichtung bei vorgesehener Anwendung, in vertikaler Richtung von einer unterseitigen Bodenkontur bis zu einer oberseitigen Abschlusskontur. Senkrecht hierzu ist das Gehäuse zudem durch eine Seitenkontur begrenzt. Dabei ist das Gehäuse wenigstens zu einem wesentlichen Teil, das heißt insbesondere überwiegend durch ein aus Elastomer gebildetes Gehäuseformteil gebildet, das hinsichtlich eines Gesamtprofils der Sende-/Empfangsvorrichtung zumindest die oberseitige Abschlusskontur und die Seitenkontur formt, wobei sich die Seitenkontur von der Bodenkontur bis zur oberseitigen Abschlusskontur und die oberseitige Abschlusskontur zwischen zwei voneinander abgewandten Seiten des Gehäuses insbesondere durchgehend erstreckt. Dadurch dass hierbei sowohl die oberseitige Abschlusskontur als auch die Seitenkontur durch Elastomer gebildet sind, ist das Gehäuse gegen mechanische Beanspruchungen geschützt, die die Sende-/Empfangsvorrichtung von der Oberseite her oder in einer der horizontalen Richtungen von der Seite beaufschlagen könnten und wie sie insbesondere auf Baustellen oder in Industrieanlagen auftreten können.

Derartige Bediengeräte sind seit Jahren im Einsatz und werden beispielsweise zur Fernsteuerung von Kränen auf Baustellen eingesetzt. Beim Gehäuse handelt es sich häufig um kastenförmige Gebilde, an denen Griffe angebracht sind und die entweder unmittelbar von den Händen des Benutzers gehalten werden, oder aber über einen Tragegurt. Mit dessen Hilfe kann das Bediengerät vor dem Körper der Bedienperson gehalten werden, die dann die Hände zur Bedienung beispielsweise von zwei Joysticks frei hat. Ferner weisen derartige Sende-/Empfangsvorrichtungen häufig bereichsweise Gummierungen auf, die insbesondere an den vorgesehenen Griffbereichen eine bessere Griffigkeit gewährleisten und das Gerät besser vor mechanischen Beanspruchungen schützen sollen.

DE 829 005 beschreibt einen Steuergriff für Hebemaschinen, der an einem Kabel hängt. Der Steuergriff weist dabei, um Beschädigungen des Geräts und Verletzungen der bedienenden Person bei einer Schwingbewegung zu vermeiden, ein hantelförmiges Gehäuse auf, dessen Oberfläche komplett aus Gummi hergestellt ist.

WO 2008/055480 beschreibt ein Fernsteuergerät für Industriegeräte mit einem Gehäuse zur Aufnahme einer Steuerelektronik und zur Anbringung mehrerer Bedienelemente. Das Gehäuse ist im Wesentlichen durch ein Presstrangprofil gebildet, dessen Stirnseiten jeweils durch ein Halteelement verschlossen werden. Die Halteelemente dienen dabei gleichzeitig zur Ausbildung von Haltegriffen und Standfüßen.

Die Broschüre "ENRANGE MLTX2 Bellybox Transmitter", Canada, 16. März 2012 (2012-03-16), Seiten 1-2, XP055186202 beschreibt eine Steuerungsvorrichtung mit einem zweiteiligen Gehäuse. Dieses weist einen wannenförmigen Teil auf, in dem die Steuerungselektronik aufgenommen ist und das durch einen Aufsatz verschlossen wird. An dem Aufsatz sind dabei verschiedene Bedienelemente gehalten und Handgriffe ausgeformt.

WO 2009/155929 A1 beschreibt einen Steuergriff für Hebevorrichtungen in Krankenhäusern, dessen Gehäuse aus einem thermoplastischen Elastomer hergestellt sein kann. Der Steuergriff weist dabei an einer Oberseite des Gehäuses, mehrere Bedientasten und an einer davon abgewandten Unterseite drei Eingriffselemente, zum sicheren Halten des Steuergriffs auf.

US 8,325,074 B1 zeigt eine Steuerungseinrichtung für Hubgeräte, die in einem wannenförmigen Gehäuse untergebracht ist. Das Gehäuse ist dabei aus Polyvinyl Chlorid, einer Mischung aus Polypropylen und Polyethylen oder aus Polyamid gebildet.

Das Dokument Control Chief Wireless Solutions: "L Series Industrial Wireless Radio Remote Control System" vom 09. Mai 2010, Seiten 1-2, XP055385417 offenbart eine Steuerungseinrichtung mit einem wannenförmigen Gehäuse, an dem ein außen liegender umlaufender Zusatzschutz angebracht ist. Das Gehäuse ist dabei aus einem sogenannten BayBlend hergestellt.

Nachteilig an den bekannten Sende-/Empfangsvorrichtungen ist dabei, dass die Gummierungen in der Regel einen zusätzlichen Herstellungsaufwand bewirken, da die betreffenden Bauelemente entweder bei ihrer Herstellung zusätzlich mit dieser versehen werden müssen oder die gewünschten Gummierungen an der bereits fertig hergestellten Sende-/Empfangsvorrichtung nachgerüstet werden müssen. Je umfangreicher die Griffigkeit beziehungsweise der Schutz der betreffenden Sende-/Empfangsvorrichtung sein soll, desto höher ist dabei auch der zusätzliche Aufwand der hinsichtlich der Herstellung der Gummierung betrieben werden muss. So sind beispielsweise auch Sende-/Empfangsvorrichtungen, wie beispielsweise Telefone bekannt, die insbesondere für die Verwendung im Outdoorbereich vorgesehen sind, und hierfür ein Kunststoffgehäuse aufweisen, das innenseitig aus einem starren Kunststoff und außenseitig aus einer Elastomerschicht besteht. Die Herstellung derartiger Zwei-Komponenten-Kunststoffe führt wiederum zu relativ hohen Herstellungskosten der Sende-IEmpfangsvorrichtung insgesamt.

Die Aufgabe der Erfindung ist es, bei einer gattungsgemäßen Sende-/Empfangsvorrichtung die genannten Nachteile zu vermeiden und in einfacher Weise einen möglichst umfangreichen Schutz gegen mechanische Beaufschlagungen und eine gute Griffigkeit der Sende-/Empfangsvorrichtung zu gewährleisten.

Diese Aufgabe wird durch eine Sende-/Empfangsvorrichtung mit den Merkmalen des Anspruchs 1 gelöst. Dabei sind die oberseitige Abschlusskontur und die Seitenkontur durch einen einstückig aus Elastomer ausgeformten Teil des Gehäuseformteiles gebildet. Zudem formt das Gehäuseformteil eine die Aufnahme begrenzende Wanne mit einer verschließbaren Öffnung aus. Die Wanne bildet in horizontaler Richtung eine umlaufende Wandung aus, die komplett durch das aus Gummi oder einem sonstigen Elastomer hergestellten Gehäuseformteil gebildet ist, was einen wirksamen Schutz der in der Aufnahme angeordneten Steuerelektronik ermöglicht. Hierdurch kann die Sende-/Empfangsvorrichtung durch einfache Bestückung des im Wesentlichen aus dem Gehäuseformteil gebildeten Gehäuses fertig montiert werden, wodurch sich auch die Herstellungskosten für die Sende-/Empfangsvorrichtung insgesamt vermindern. Zudem kann das Gehäuseformteil auf diese Weise besonders stabil ausgebildet werden, um die Sende-/Empfangsvorrichtung noch besser gegen mechanische Beanspruchungen schützen zu können. Auf diese Weise können die in der Aufnahme untergebrachten Elektrik-/Elektronikteile besonders gut gegen Stöße und gegen eintretende Feuchtigkeit geschützt werden. Zudem ist beispielsweise im Falle einer durch ein Telefon gebildeten Sende-/Empfangsvorrichtung eine leichte Montage möglich, da alle Elektronikbauteile lediglich in das Gehäuseformteil gesetzt werden müssen und die Oberfläche, beispielsweise durch das jeweilige Bedienfeld beziehungsweise den Touchscreen verschlossen werden kann. Dabei ist zumindest die Seitenkontur an allen horizontalen Seiten des Gehäuses ausgebildet. Im Falle eines Gehäuses mit kastenförmiger Aufnahme weist das Gehäuseformteil demnach vier insbesondere durchgehende Seitenkonturen auf, und kann somit für einen wirksamen Schutz der Aufnahme gegen mechanische Beanspruchungen in alle vier horizontalen Richtungen sorgen. Der die Aufnahme bildende Gehäuseteil kann dabei vollständig durch das Gehäuseformteil gebildet werden.

Vorteilhafterweise ist das Gehäuseformteil hierbei aus einem einheitlichen Elastomermaterial hergestellt, wodurch die Produktionskosten der Sende-/Empfangseinrichtung trotz der umfangreichen Gummierung relativ gering gehalten werden kann.

Ferner ist es günstig, wenn in die umlaufende Wandung eine beispielsweise schachtförmige Akku-Kammer eingelassen ist. Durch diese Integration der AkkuAufnahme in dem durch Elastomer gebildeten Gehäuseformteil kann diese besonders gut abgedichtet und dadurch eine hierin aufgenommene Batterie- oder Akkuzelle wirksam gegen Feuchtigkeit geschützt werden.

Dabei ist es ferner günstig, wenn in das Gehäuseformteil zwischen der Akku-Kammer und der Aufnahme ein abdichtbarer Verlegepfad eingelassen ist, über den beispielsweise elektrische Verbindungskabel von dem in der Akku-Kammer aufgenommenen Akkupack zur Steuerelektronik verlegt werden können.

In einer besonders vorteilhaften Ausführungsform bildet das aus Elastomer gebildeten Gehäuseformteil zusätzlich auch die Bodenkontur, wobei sich diese insbesondere durchgehend zwischen zwei voneinander abgewandten Seiten des Gehäuses erstreckt.
Auf diese Weise ist das Gehäuse zusätzlich auch an seiner Unterseite gegen mechanische Beanspruchungen geschützt, wie sie insbesondere auf Baustellen oder in Industrieanlagen auftreten können. Hierdurch bildet das zu allen Seiten und bevorzugterweise einteilig aus Elastomer gebildete Gehäuse, insbesondere einen guten Fallschutz, da der beim Aufschlagen erzeugte Stoß in jedem Fall von dem Elastomer aufgegangen werden kann, egal in welcher Ausrichtung die Sende-/Empfangsvorrichtung aufschlägt. Darüber hinaus bietet das Gehäuse an allen Seiten eine erhöhte Griffigkeit und ist beispielsweise im abgestellten Zustand gegen Abrutschen gesichert.

Dabei ist es günstig, wenn das aus Elastomer gebildete Gehäuseformteil eine die Aufnahme bodenseitig begrenzende Bodenplatte bildet, so dass die in der Aufnahme untergebrachten Elektro-/Elektronikbauteile besonders gut gegen bodenseitig eintretende Feuchtigkeit geschützt werden können.

Alternativ hierzu ist es günstig, wenn das aus Elastomer gebildete Gehäuseformteil zusätzlich auch eine die Aufnahme oberseitig begrenzende Lagerplatte bildet, die hierzu beispielsweise mit einer entsprechenden Dicke oder zusätzlichen Aussteifungsrippen hergestellt ist, um eine ausreichende Biegesteifigkeit aufzuweisen. Hierdurch kann die Aufnahme besonders gut gegen oberseitig eintretende Feuchtigkeit geschützt werden, wie sie beispielsweise bei Niederschlägen im Außenbereich auftreten können.

Dabei ist es günstig, wenn die oberseitige Abschlusskontur in vertikaler Richtung über das wenigstens eine Bedienungselement hinaus ragt. Auf diese Weise können die an der Oberseite des Gehäuses angebrachten Bedienungselemente, wie beispielsweise Joysticks, gegen mechanische Stöße geschützt werden, die beispielsweise beim Herunterfallen der Sende-/Empfangsvorrichtung entstehen können.

Vorteilhafterweise ist die oberseitige Abschlusskontur durch eine Griffanordnung des Gehäuseformteiles gebildet, wodurch dieser Teil des Gehäuseformteiles neben seiner Schutzfunktion auch als komfortabel zu haltendes Griffelement dienen kann.

Hierbei ist es zudem günstig, wenn die Griffanordnung umlaufend ausgebildet ist, wodurch einerseits ein besonders effektiver Schutz der Bedienungselemente gewährleistet werden kann und die Griffanordnung besonders viele Griffpositionen und unterschiedliche Anwendungsmöglichkeiten erlaubt.

Vorteilhafterweise bildet die Bodenkontur wenigstens einen standfähigen Kontaktbereich aus, über den die Sende-/Empfangsvorrichtung abstellbar ist. Hierbei können beispielsweise ein als Kontaktbereich dienender umlaufender Rand oder mehrere zueinander beabstandete Kontaktbereiche vorgesehen sein, die eine Stellebene definieren, durch die wiederum eine vordefinierte Standposition der Sende-/Empfangsvorrichtung gegenüber einem Untergrund festgelegt ist.

In einer weiteren vorteilhaften Ausführungsform ist an dem Gehäuseformteil wenigstens eine starre Platte aufgenommen, die zur zusätzlichen Aussteifung des Gehäuses dienen kann. Hierdurch kann die Sende-/Empfangsvorrichtung innerhalb des Grundkörpers nach Bedarf ausgesteift werden, um beispielsweise eine spielfreie Verbindung oder Lagerung bestimmter Bauelemente zu ermöglichen.

Dabei ist es beispielsweise günstig, wenn eine erste starre Platte durch eine Lagerplatte gebildet ist, an der das wenigstens eine Bedienungselement verschwenkbar gelagert ist. Hierdurch ist ein einfacher und spielfreier Einbau von Bedienungselementen, wie beispielsweise Joysticks an dem Gehäuse möglich.

Ferner ist es günstig, wenn eine zweite starre Platte durch eine Bodenplatte gebildet ist, die die Aufnahme nach unten begrenzt. Auf diese Weise können die in der Aufnahme untergebrachten Bauelemente, gegen äußere Einwirkungen geschützt und das Gehäuse auch bodenseitig ausgesteift werden.

Bevorzugterweise ist das Elastomer zudem durch ein thermoplastisches Elastomer gebildet, wodurch eine besonders vielseitige und exakte Formgebung bei der Herstellung des Gehäuseformteiles möglich ist.

In den Figuren ist eine beispielhafte Ausführungsform der Erfindung dargestellt. Es zeigen:
- Figur 1: eine perspektivische Ansicht einer erfindungsgemäßen Sende-/Empfangsvorrichtung ,
- Figur 2: eine Seitenansicht der Sende-/Empfangsvorrichtung in Richtung II aus Fig. 1 und
- Figur 3: eine perspektivische Explosionsdarstellung der Fernsteuerungsvorrichtung nach Fig. 1.

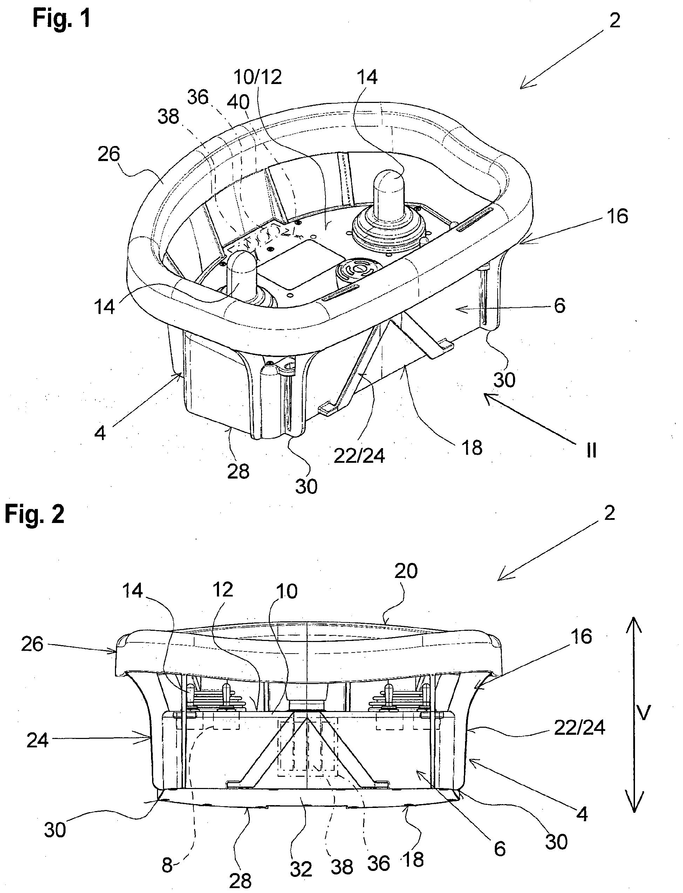

Die Figuren 1 bis 3 zeigen eine kabellose Sende-/Empfangsvorrichtung 2, wie beispielsweise für einen Kran, die ein Gehäuse 4 aufweist. Das Gehäuse 4 bildet dabei eine kastenförmige Aufnahme 6, die zur geschützten Unterbringung von Elektro- und Elektronikbauteilen 8 einer Steuerungselektronik dient, wie in Fig. 2 durch gestrichelte Linien dargestellt. Zudem sind an einer Lagerplatte 10, die eine Oberseite 12 des Gehäuses 4 bildet, mehrere Bedienungselemente 14 gelagert, die unter anderem zwei Joysticks umfassen.

Die kastenförmige Aufnahme 6 ist dabei im Wesentlichen durch ein Gehäuseformteil 16 des Gehäuses 4 begrenzt beziehungsweise gebildet, das einteilig aus einem thermoplastischen Elastomer hergestellt ist. Dieses bildet bezogen auf die bei üblicher Anwendung einzunehmende Ausrichtung der Sende-/Empfangsvorrichtung 2 in vertikaler Richtung V sowohl eine durchgehende unterseitige Bodenkontur 18 als auch eine durchgehende oberseitige Abschlusskontur 20. Senkrecht hierzu bildet das Gehäuseformteil 16 zudem in alle horizontalen Richtungen eine durchgehende Seitenkontur 22, die durch eine auf Höhe der Aufnahme 6 umlaufende Wandung 24 gebildet ist.

Auf diese Weise sind die jeweils äußersten Bereiche der Sende-/Empfangsvorrichtung 2 in alle räumlichen Richtungen wirksam durch das elastische Gehäuseformteil 16 gebildet.

Die oberseitige Abschlusskontur 20 ist hierbei durch eine Griffanordnung 26 gebildet, die am oberen Ende der Sende-/Empfangsvorrichtung 2 ringförmig umlaufend ausgebildet ist. Gegenüber den Bedienungselementen 14 ist die Griffanordnung 26 dabei so angeordnet, dass sie über diese und dabei insbesondere über die beiden Joysticks in vertikaler Richtung hinaus ragt und sich die Achsen der unbetätigten Joysticks eine durch die umlaufenden Griffanordnung 26 aufgespannte virtuelle Ebene schneiden.

Die unterseitige Bodenkontur 18 ist durch einen umlaufenden Rand 28 des Gehäuseformteiles 16 gebildet, und formt an den Ecken zueinander beabstandete Kontaktbereiche 30 aus, über die die Sende-/Empfangsvorrichtung 2 in einer vorgegebenen Ausrichtung auf einem Untergrund abgestellt werden kann (nicht dargestellt). An dem Rand 28 ist zudem eine starre, abnehmbare Bodenplatte 32 eingelassen, die die Aufnahme 6 nach unten verschließt. Über diese kann bedarfsweise auf die in der Aufnahme 6 untergebrachten Elektro- und Elektronikbauteile 8 zugegriffen werden.

Alternativ zu der dargestellten Ausführungsform kann die oberseitige Lagerplatte 10 oder die Bodenplatte 32 in das aus Elastomer hergestellte Gehäuseformteil 16 integriert sein. Die auf diese Weise ebenfalls durch Elastomer gebildete Lagerplatte 10 beziehungsweise Bodenplatte 32 kann hierbei beispielsweise mit zusätzlichen Verstärkungsrippen versehen sein, um die jeweils notwendige Biegesteifigkeit zu gewährleisten. Auf diese Weise bildet das Gehäuseformteil 16 neben der Griffanordnung 26 einen wannenförmigen Teil aus, der die Aufnahme 6 begrenzt und je nach Ausführung entweder eine oberseitige oder bodenseitige Öffnung aufweist (nicht dargestellt).

Das Gehäuse 4 kann somit bis auf das zum Verschließen der Öffnung notwendige Element vollständig aus dem einteiligen Gehäuseformteil 16 aus Elastomer gebildet werden. Die Öffnung ist dann beispielsweise durch die Anbringung der Lagerplatte 10 oder durch die Bodenplatte 32 verschließbar, die vorteilhafterweise ebenfalls aus Elastomer gebildet sein können.

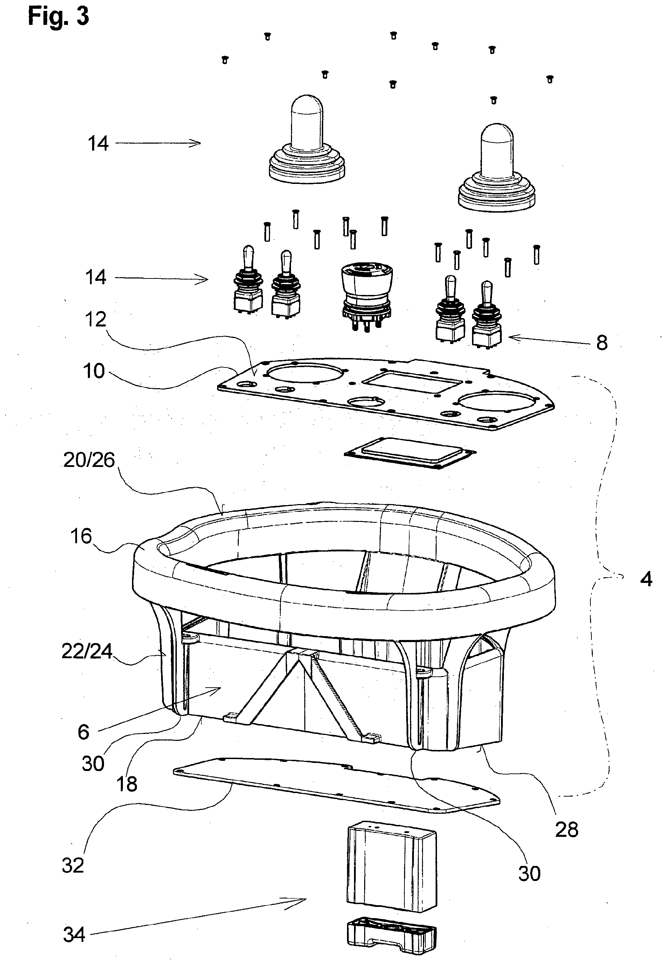

Ferner kann alternativ zu der dargestellten Ausführungsform, in der eine zur Aufnahme 6 separat ausgebildete und in dieser aufgenommenen Akkuaufnahme 34 vorgesehen ist (siehe Fig. 3), eine in das Gehäuseformteil 16 integrierte Akku-Kammer 36 vorgesehen sein, in der beispielsweise ein Akkupack 38 aufnehmbar ist, wie durch strichpunktierte Linien in Fig. 1 und 2 dargestellt. Um dabei den Akkupack 38 mit den in der Aufnahme 6 untergebrachten Elektro-/Elektronikelementen 8 verbinden zu können, sind zudem nutförmige Verlegepfade 40 in die Oberseite 12 eingelassen, in denen beispielsweise Verbindungskabel verlegt werden können. Anschließend kann in die Verlegungspfade 40 ein Dichtmittel eingebracht werden, um sowohl die Aufnahme 6 als auch die Akku-Kammer 36 zur Außenseite hin abzudichten.

## Patentansprüche

1. Tragbare Sende-/Empfangsvorrichtung (2), insbesondere in Form einer kabellosen Fernsteuerungsvorrichtung für Hub- und Industriegeräte,
mit einem Gehäuse (4), das eine Aufnahme (6) zur Unterbringung einer Steuerelektronik aufweist und zur Lagerung wenigstens eines Bedienungselementes (14) dient, und
das sich in vertikaler Richtung (V) von einer unterseitigen Bodenkontur (18) bis zu einer oberseitigen Abschlusskontur (20) erstreckt und senkrecht hierzu durch eine Seitenkontur (22) begrenzt ist,
wobei das Gehäuse (4) wenigstens zu einem wesentlichen Teil durch ein aus Elastomer gebildetes Gehäuseformteil (16) gebildet ist, das zumindest die oberseitige Abschlusskontur (20) und die Seitenkontur (22) bildet,
**dadurch gekennzeichnet, dass** das Gehäuseformteil (16) die oberseitige Abschlusskontur (20) und die Seitenkontur (22) des Gehäuses (4) einstückig aus Elastomer bildet und dabei eine die Aufnahme begrenzende Wanne ausformt, die eine komplett aus dem Elastomer gebildete umlaufende Wandung (24) und eine verschließbare Öffnung aufweist.

2. Sende-/Empfangsvorrichtung nach Anspruch 1, **dadurch gekennzeichnet, dass** das Gehäuseformteil (16) aus einem einheitlichen Elastomermaterial gebildet ist.

3. Sende-/Empfangsvorrichtung nach Anspruch 1 oder 2, **dadurch gekennzeichnet, dass** in die umlaufende Wandung eine Akku-Kammer (36) eingelassen ist.

4. Sende-/Empfangsvorrichtung nach Anspruch 3, **dadurch gekennzeichnet, dass** in das Gehäuseformteil (16) zwischen der Akku-Kammer (36) und der Aufnahme (6) ein abdichtbarer Verlegepfad (40) eingelassen ist.

5. Sende-/Empfangsvorrichtung nach einem der Ansprüche 1 bis 4, **dadurch gekennzeichnet, dass** das aus Elastomer gebildete Gehäuseformteil (16) zusätzlich auch die Bodenkontur (18) bildet.

6. Sende-/Empfangsvorrichtung nach einem der Ansprüche 1 bis 5, **dadurch gekennzeichnet, dass** das aus Elastomer gebildete Gehäuseformteil (16) eine die Aufnahme (6) bodenseitig begrenzende Bodenplatte (32) bildet.

7. Sende-/Empfangsvorrichtung nach einem der Ansprüche 1 bis 5, **dadurch gekennzeichnet, dass** das aus Elastomer gebildete Gehäuseformteil (16) eine die Aufnahme (6) oberseitig begrenzende Lagerplatte (10) bildet.

8. Sende-/Empfangsvorrichtung nach einem der Ansprüche 1 bis 7, **dadurch gekennzeichnet, dass** die oberseitige Abschlusskontur (20) in vertikaler Richtung (V) über das wenigstens eine Bedienungselement (14) hinaus ragt.

9. Sende-/Empfangsvorrichtung nach einem der Ansprüche 1 bis 8, **dadurch gekennzeichnet, dass** die oberseitige Abschlusskontur (20) durch eine Griffanordnung (26) des Gehäuseformteiles (16) gebildet ist.

10. Sende-/Empfangsvorrichtung nach Anspruch 9, **dadurch gekennzeichnet, dass** die Griffanordnung (26) umlaufend ausgebildet ist.

11. Sende-/Empfangsvorrichtung nach einem der Ansprüche 1 bis 10, **dadurch gekennzeichnet, dass** die Bodenkontur (18) wenigstens einen standfähigen Kontaktbereich (30) bildet, über den die Sende-/Empfangsvorrichtung (2) abstellbar ist.

12. Sende-/Empfangsvorrichtung nach einem der Ansprüche 1 bis 11, **dadurch gekennzeichnet, dass** an dem Gehäuseformteil (16) wenigstens eine starre Platte (10; 32) zur Aussteifung des Gehäuses aufgenommen ist.

13. Sende-/Empfangsvorrichtung nach Anspruch 12, **dadurch gekennzeichnet, dass** eine erste starre Platte durch die Lagerplatte (10) gebildet ist, an der das wenigstens eine Bedienungselement (14) verschwenkbar gelagert ist.

14. Sende-/Empfangsvorrichtung nach Anspruch 12 oder 13, **dadurch gekennzeichnet, dass** eine zweite starre Platte durch die Bodenplatte (32) gebildet ist, die die Aufnahme (6) bodenseitig begrenzt.

15. Sende-/Empfangsvorrichtung nach einem der Ansprüche 1 bis 14, **dadurch gekennzeichnet, dass** das Elastomer durch ein thermoplastisches Elastomer gebildet ist.

## Claims

1. Portable transmitting/receiving device (2), in particular in the form of a cableless remote control device for lifting and industrial devices,
with a housing (4) which has a receiving portion (6) for accommodating an electronic controller and for mounting at least one operating element (14), and
which extends in the vertical direction (V) from a lower-face base contour (18) to an upper-face terminating contour (20) and is perpendicularly delimited by a lateral contour (22),
wherein at least a substantial part of the housing (4) is made of molded housing part (16) made of an elastomer, said molded housing part forming at least the upper-face terminating contour (20) and the lateral contour (22),
**characterised in that** the molded housing part (16) forms the upper-side terminating contour (20) and the lateral contour (22) of the housing (4) as one piece from elastomer, and in this situation forms a basin which delimits the receiving area and which has a circumferential wall (24) that is completely made of the elastomer and which has a closable opening.

2. Transmitting/receiving device according to claim 1, **characterised in that** the molded housing part (16) is formed from a uniform elastomer material.

3. Transmitting/receiving device according to claim 1 or 2, **characterised in that** a battery chamber (36) is let into the circumferential wall.

4. Transmitting/receiving device according to claim 3, **characterised in that** a sealable cable-laying path (40) is let into the molded housing part (16) between the battery chamber (36) and the receiving portion (6).

5. Transmitting/receiving device according to any one of claims 1 to 4, **characterised in that** the molded housing part (16) formed of elastomer additionally also forms the base contour (18).

6. Transmitting/receiving device according to any one of claims 1 to 5, **characterised in that** the housing molded part (16) formed of elastomer forms a base plate (32), delimiting the receiving portion (6) on the base side.

7. Transmitting/receiving device according to any one of claims 1 to 5, **characterised in that** the housing molded part (16) formed of elastomer forms a bearing plate (10) delimiting the receiving portion (6) on the upper face.

8. Transmitting/receiving device according to any one of claims 1 to 7, **characterised in that** the upper-face terminating contour (20) projects outwards in a vertical direction (V) over the at least one operating element (14).

9. Transmitting/receiving device according to any one of claims 1 to 8, **characterised in that** the upper-face terminating contour (20) is formed by a handle arrangement (26) of the housing molded part (16).

10. Transmitting/receiving device according to claim 9, **characterised in that** the handle arrangement (26) is configured as circumferential.

11. Transmitting/receiving device according to any one of claims 1 to 10, **characterised in that** the base contour (18) forms at least one stable contact region (30), by means of which the transmitting/receiving device (2) can be set down.

12. Transmitting/receiving device according to any one of claims 1 to 11, **characterised in that** at least one rigid plate (10; 32) is adopted into the housing molded part (16) in order to add rigidity to the housing.

13. Transmitting/receiving device according to claim 12, **characterised in that** a first rigid plate is formed by the bearing plate (10), on which the at least one operating element (14) is mounted such as to pivot.

14. Transmitting/receiving device according to claim 12 or 13, **characterised in that** a second rigid plate is formed by the base plate (32), which delimits the receiving portion (6) on the base side.

15. Transmitting/receiving device according to any one of claims 1 to 14, **characterised in that** the elastomer is formed by a thermoplastic elastomer.

## Revendications

1. Dispositif d'émission/réception portable (2), en particulier sous la forme d'un appareil de télécommande sans fil destiné à des appareils de levage et des appareils industriels,
comprenant un boîtier (4) muni d'un réceptacle (6) destiné à recevoir une électronique de commande et qui sert à loger au moins un élément de commande (14), et
lequel boîtier s'étend dans la direction verticale (V) depuis un contour de fond (18) du côté inférieur jusqu'à un contour terminal (20) du côté supérieur et est délimité perpendiculairement à cela par un contour latéral (22),
où le boîtier (4) est formé au moins pour une partie essentielle par une partie de boîtier moulée (16) formée d'un élastomère et qui forme au moins le contour terminal (20) du côté supérieur et le contour latéral (22),
**caractérisé en ce que** la partie de boîtier moulée (16) forme d'une seule pièce en élastomère le contour terminal (20) du côté supérieur et le contour latéral (22) du boîtier (4) et forme ainsi une cuvette qui délimite le réceptacle, qui comporte une paroi périphérique (24), entièrement formée de l'élastomère, et une ouverture pouvant être fermée.

2. Dispositif d'émission/réception selon la revendication 1, **caractérisé en ce que** la partie de boîtier moulée (16) est formée en un matériau élastomère unitaire.

3. Dispositif d'émission/réception selon la revendication 1 ou 2, **caractérisé en ce qu'**une chambre pour batterie (36) est intégrée dans la paroi périphérique.

4. Dispositif d'émission/réception selon la revendication 3, **caractérisé en ce que** dans la partie de boîtier moulée (16) un chemin de pose (40) pouvant être étanche est prévu entre la chambre pour batterie (36) et le réceptacle (6).

5. Dispositif d'émission/réception selon l'une des revendications 1 à 4, **caractérisé en ce que** la partie de boîtier moulée (16) formée en élastomère forme en outre aussi le contour de fond (18).

6. Dispositif d'émission/réception selon l'une des revendications 1 à 5, **caractérisé en ce que** la partie de boîtier moulée (16) formée en élastomère forme une plaque de fond (32) délimitant du côté fond le réceptacle (6).

7. Dispositif d'émission/réception selon l'une des revendications 1 à 5, **caractérisé en ce que** la partie de boîtier moulée (16) formée en élastomère forme une plaque de support (10) délimitant du côté supérieur le réceptacle (6).

8. Dispositif d'émission/réception selon l'une des revendications 1 à 7, **caractérisé en ce que** le contour terminal (20) du côté supérieur fait saillie dans la direction verticale (V) au-delà d'au moins un élément de commande (14).

9. Dispositif d'émission/réception selon l'une des revendications 1 à 8, **caractérisé en ce que** le contour terminal (20) du côté supérieur est formé par un agencement de poignée (26) de la partie de boîtier moulée (16).

10. Dispositif d'émission/réception selon la revendication 9, **caractérisé en ce que** l'agencement de poignée (26) est configuré de manière circonférentielle.

11. Dispositif d'émission/réception selon l'une des revendications 1 à 10, **caractérisé en ce que** le contour de fond (18) forme au moins une zone de contact (30) pouvant tenir debout, sur laquelle le dispositif d'émission/réception (2) peut reposer.

12. Dispositif d'émission/réception selon l'une des revendications 1 à 11, **caractérisé en ce qu'**au moins une plaque rigide (10 ; 32) est reçue sur la partie de boîtier moulée (16) pour rigidifier le boîtier.

13. Dispositif d'émission/réception selon la revendication 12, **caractérisé en ce qu'**une première plaque rigide est formée par la plaque de support (10), sur laquelle l'au moins un élément de commande (14) est monté de manière pivotable.

14. Dispositif d'émission/réception selon la revendication 12 ou 13, **caractérisé en ce qu'**une deuxième plaque rigide est formée par la plaque de fond (32), qui délimite du côté fond le réceptacle (6).

15. Dispositif d'émission/réception selon l'une des revendications 1 à 14, **caractérisé en ce que** l'élastomère est formé par un élastomère thermoplastique.
